Europäisches Patentamt

European Patent Office

Office européen des brevets

(19)

(11) Publication number: **0 147 180**
**A2**

## (12) EUROPEAN PATENT APPLICATION

(21) Application number: 84308930.1

(22) Date of filing: 20.12.84

(51) Int. Cl.⁴: **G 01 H 9/00**
**G 02 F 1/13**

(30) Priority: 27.12.83 US 565231

(43) Date of publication of application:
03.07.85 Bulletin 85/27

(84) Designated Contracting States:
AT BE CH DE FR GB IT LI LU NL SE

(71) Applicant: Raj Technology Partnership
1360 North Sandburg Terrace
Chicago Illinois 60610(US)

(72) Inventor: Sandhu, JasWinder S.
1360 North Sandburg Terrace
Chicago, Illinois 60610(US)

(74) Representative: MacGregor, Gordon et al,
ERIC POTTER & CLARKSON 14 Oxford Street
Nottingham, NG1 5BP(GB)

(54) Improved ultrasonic detector cell and system.

(57) An orthoscopic ultrasonic imaging system which includes an acoustic transducer for insonifying an object to be inspected and an improved liquid crystal detector cell for receiving an imaging beam from the insonified object and for displaying a visible image. An electric, magnetic or acoustic biasing field is applied to the liquid crystal cell for raising the cell to an acousto-optic threshold which permits detection and display of low intensity imaging signals. The cell surfaces which contact the liquid crystal material are treated so as to preferentially align the liquid crystal molecules for situations where electric or magnetic field biasing is used. Preferential alignment means that the longitudinal axis of the molecules are on average parallel to each other as indicated by the bulk director. Low intensity, acoustic fields [e.g. less than $10^{-3}$ w/cm²] can be detected and displayed, and the object being examined can be insonified with low intensity ultrasonic beams.

FIG. 1

EP 0 147 180 A2

IMPROVED ULTRASONIC DETECTOR
CELL AND SYSTEM

BACKGROUND OF THE INVENTION

This invention relates to the general field of acoustic imaging, and in particular, to highly sensitive systems and apparatus for detecting and displaying orthoscopic acoustic images.

The use of ultrasonics to nondestructively and noninvasively inspect objects and bodies for internal discontinuities, irregular shapes, etc., is well known in both the industrial and medical fields. This invention deals with the formation of orthoscopic or two dimensional images on a liquid crystal cell rather than the formation of holographic or three dimensional images.

In one form, ultrasonic imaging is accomplished by using electronic displays in which the ultrasonic signal is electronically detected (by a piezoelectric detector array) and enhanced. Green, P. S., Schaefer, L. F., Jones, E. D., Suarez, J. R., A New Performance Ultrasonic Camera, in Acoustical Holography, Vol. 5, Ed. Green, P. S., Plenum Press, New York 1974, 493-503.

In another form, the ultrasonic image is proposed to be detected and displayed using a liquid crystal cell which includes a pair of cover plates between which a layer of liquid crystal material is encapsulated. See, for example, Greguss, U. S. Patent 3,831,434; and Dion, U. S. Patent 4,338,821. The performance of liquid crystal cells may be enhanced by treating the liquid-crystal-contacting surfaces of the cell with a surfactant, such as lecithin. It is also known that liquid crystal materials will respond to externally applied force fields. See, for example, Greguss; Dion; Tsunoda et al., U. S. Patent No. 4,035,060; Mailer, U. S. Patent 3,837,-423; and "New Techniques of Acoustic Image Detection," Mailer et al., International Journal of Non-Destructive Testing, 1973 Vol. 4, pp. 283-299. Introduction to Liquid Crystals Ed. E. B. Priestly, Peter J. Wojtowicz, Ping Sheng. Plenum Press June 1976.

Liquid crystal detector cells may be preferred to fully electronic detection and display systems, since liquid crystal cells can be less expensive to manufacture and maintain than fully electronic systems and can provide substantially instantaneous well-resolved images without the need for electronic image enhancement, through complicated signal processing, or adjustment.

The use of ultrasonics in medical applications, is increasing, and in such applications, it is particularly desirable that the intensity of the insonifying ultrasonic field (i.e., the beam incident on the patient) be at the lowest possible level. In order to be useful in a wide range of such applications, the liquid crystal cell must be able to detect ultrasonic fields that have passed through or have been reflected from the body or organ to be examined.

In present medical applications the insonifying acoustic field has a maximum intensity on the order of $100 \times 10^{-3}$ w/cm$^2$. It is known that in human tissue there is a loss of ultrasonic intensity of about 3 db per centimeter of tissue penetrated. Thus the intensity of the imaging acoustic field exiting the patient is much less than $10^{-3}$ w/cm$^2$. For example, in order to penetrate a 10 cm thick tissue, there would be a loss of ultrasonic intensity of 30 db. Therefore, if the incident intensity is $100 \times 10^{-3}$ w/cm$^2$ the exiting intensity will be about $100 \times 10^{-6}$ w/cm$^2$. Present orthoscopic imaging systems using liquid crystal cells can not detect a field and display an image where the incident acoustic intensity is much less than $10^{-3}$ w/cm$^2$.

Thus prior liquid crystal detecting cells are not capable of detecting and displaying an image from the low acoustic intensity beams that exit an examined object.

It is therefore an object of this invention to provide a liquid crystal-type detector cell for use in an orthoscopic ultrasonic inspection system, of the type used in medical diagnosis, which can detect low intensity acoustic fields.

It is another object of this invention to provide an orthoscopic liquid crystal-type ultrasonic inspection system which is capable of detecting and displaying ultrasonic fields having intensities less than about $10^{-3}$ $w/cm^2$.

These and other objects of this invention will become apparent from the following description and appended claims.

## SUMMARY OF THE INVENTION

There is provided by this invention a liquid crystal-type ultrasonic inspection system which can detect and orthoscopically display low intensity acoustic fields. The device is useful in medical applications and can detect acoustic fields where the intensity of the beam incident on the cell, is less than about $10^{-3}$ $w/cm^2$.

In this system there is provided a liquid crystal detector cell in which the liquid crystal material is subjected to a biasing field, preferably electrical, magnetic, or acoustic, which raises the cell to an acousto-optic threshold (i.e. a point at which the onset of an acousto-optic effect is observed). In addition, when electric or magnetic biasing is used, the surfaces of the cell covers which contact the liquid crystal are surface treated, to align the liquid crystal molecules in a prescribed direction, so as to obtain a substantially uniform interaction between the imaging beam and liquid crystal material throughout the cell.

In theory, the surface treatment acts to uniformly align the liquid crystal molecules adjacent the inner surface of the cell covers and the biasing field counteracts the surface and elastic forces so that the liquid crystal material will interact with a low intensity imaging beam and thereby form the desired image. As described hereinafter, the forces operating herein can be analyzed using mechanical-torque analogies.

Details of the cells and their operation are discussed hereinafter.

## BRIEF DESCRIPTION OF THE DRAWINGS

FIGURE 1 is a diagrammatic view showing a typical ultrasonic imaging system which employs a liquid crystal display;

FIGURE 2 is a diagrammatic view showing a typical liquid crystal cell in cross-section;

FIGURE 3 is an idealized graphic representation of the relationship between acousto-optic effect (e.g., optical transmission) and acoustic intensity and also shows the threshold (T);

FIGURE 4 shows a cell which includes means for applying a biasing electric field;

FIGURES 5a and 5b show diagrammatically the arrangement of liquid crystal molecules when no surface treatment is used;

FIGURES 6a and 6b show the alignment when surface treatments are used;

FIGURES 7-12 diagrammatically depict the forces acting on liquid crystal molecules when electric field biasing is used;

FIGURES 13-15 show a cell for use with magnetic

field biasing and depicts the forces acting on liquid crystal molecules when magnetic field biasing is used; and

FIGURE 16 is a diagrammatic view showing an apparatus for acoustic biasing and showing various angular relationships.

## DESCRIPTION OF THE PREFERRED EMBODIMENT

### I.  In General

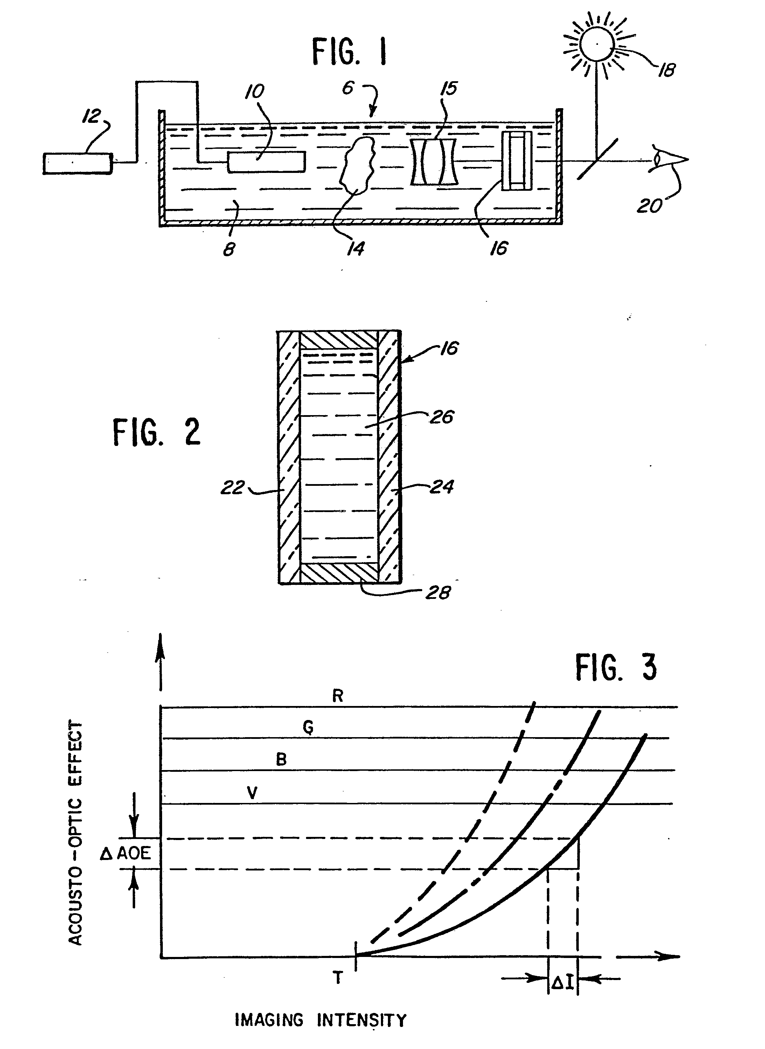

In referring now to Figure 1, the numeral 6 indicates generally a simple form of an ultrasonic imaging system, which uses a liquid crystal detector cell.  The system includes a bath 8, usually water, and an acoustic transducer 10 that is driven by a power supply 12.  Transducer 10 directs an ultrasonic or acoustic beam toward the body or object 14, which is to be inspected, so as to insonify the body.  Typically, the body is to be examined for an internal defect or feature which could not be otherwise viewed.

In the transmission mode, an image-carrying ultrasonic beam exits the body 14 with information concerning the internal structure, and that beam may be focused with an acoustic lens system 15, onto the liquid crystal detector cell 16 so as to form an acoustic image.  The interaction of the acoustic imaging beam with the liquid crystal material produces an image of the interior of the inspected body.  The images produced on the cell are orthoscopic or two dimensional rather than holographic or three dimensional.

In order to assure proper viewing, the cell 16 is illuminated using an optical system, such as 18, which includes a light source, half-silvered mirror, appropriate lenses and crossed-polarizers (not herein specifically shown) which enables the viewer 20 to see the image of the inspected body 14. The transducer 10, object 14 and cell 16 are acoustically coupled to each other by the water bath 8; however, other coupling media may be used and contact coupling rather than immersion may be employed. Furthermore, while only the acoustic transmission mode is shown, the system can also be used in an acoustic reflection mode to receive signals reflected from the interior of a body. The choice of transmission or reflection depends upon the specific situation. The cells disclosed herein can be used in either the transmission or reflective modes.

As seen in Figure 2, a simple liquid crystal cell 16 includes a pair of substantially acoustically transparent cover members or substrates 22 and 24, at least one of which is also optically transparent. A thin layer of liquid crystal material 26 is encapsulated between the cover members, by the peripheral seal or spacer 28. Many different liquid crystal materials can be used, and the specific material will depend upon the particular use to which the cell will be put. However, liquid crystal materials, such as nematic, twisted nematic, nematic/cholesteric mixtures, guest-host or smectics can be used.

In the cell 16 the cover member 24 forms the optically transparent side or viewing side, and the other cover 22 forms the imaging-beam receiving side.

Sandhu, U.S. Patent 4,379,408 discloses a liquid crystal cell and ultrasonic inspection system of the type described and by reference thereto the disclosure of Sandhu is incorporated herein.

An image is produced in a liquid crystal cell by the interaction of the acoustic imaging beam with the liquid crystal material. Figure 3 shows in idealized fashion the relationship between the acousto-optic effect (for example, light transmission between crossed polarizers) and the intensity of the ultrasonic or acoustic beam incident on the cell. It is seen that little, if any, acousto-optic effect is produced when the intensity of the incident beam is below the threshold (T). When the acoustic intensity exceeds the threshold (T), the imaging or acousto-optic effect is initiated and increases with increasing acoustic intensity. Furthermore, as intensity increases, along the curve, the acousto-optic effect shows a gray-scale range or response followed by a range of colors, such as violet (V), blue (B), green (G) and red (R).

The sensitivity of the cell is related to the change in acousto-optic effect as a function of imaging intensity (i.e., the slope of the curve shown in Figure 3). A steep curve represents greater sensitivity as there is a greater change ($\Delta$AOE) in the acousto-optic effect, or ordinate, for a given change in the intensity ($\Delta$I) or abscissa. The sensitivity of the cell can be increased as indicated by the dotted and dashed curves by operating the liquid crystal cell below but in the vicinity of the nematic/isotropic transition temperature, which for many materials can be just above the operating temperature. Changes in material composition such as by using mixtures of different nematic materials can affect the nematic/isotropic temperature. Changes in the thickness of the liquid crystal layer will affect sensitivity, with the cell becoming more sensitive as thickness increases.

In prior orthoscopic liquid crystal imaging systems the acoustic energy necessary to reach the threshold (T) was a component of the insonifying beam, thus requiring a high intensity beam to insonify the test body. However, it has been determined that energy can be applied to the cell in two components. One component can be considered as a biasing field which raises the cell to the threshold level (T) and the other component is the imaging beam which raises the cell beyond the threshold and causes the image to be displayed. It has been determined that the biasing field may be acoustic, electric and/or magnetic. The specific use of electric, magnetic and acoustic biasing fields and related considerations are discussed in the following sections.

It should be noted that in the prior unbiased orthoscopic liquid crystal systems, the intensity of the insonifying beam needed to assure a detectable imaging beam, may be too great for medical applications; whereas with appropriate biasing as described herein the insonifying beam may be of a much lower and acceptable intensity and the resulting low intensity imaging beam can be detected and the image displayed.

## II. Electric Field Biasing

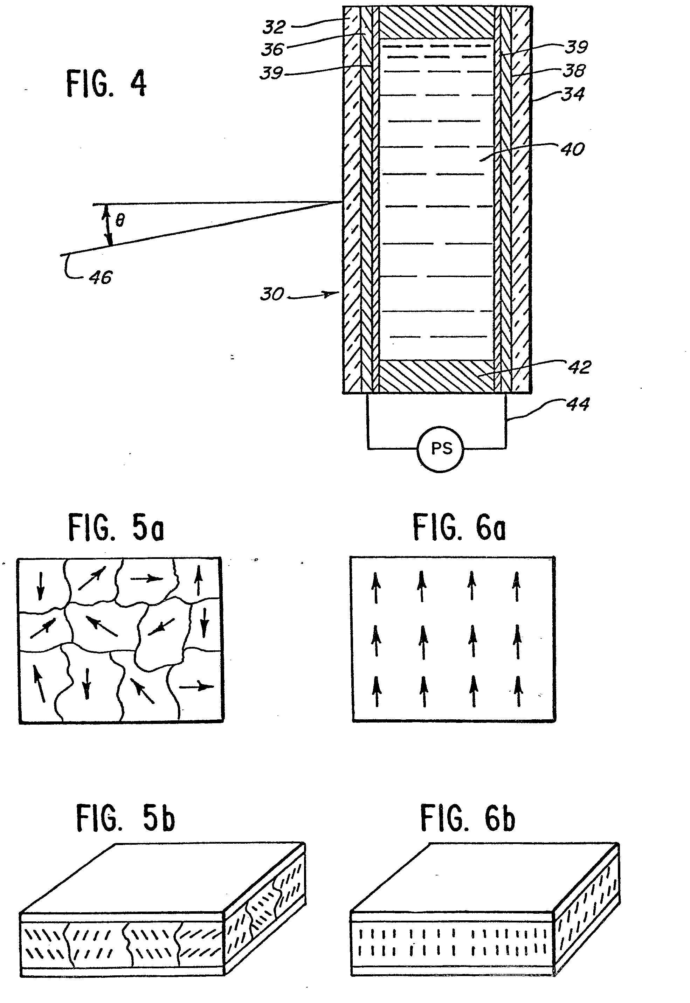

Referring to Figure 4, there is shown a liquid crystal cell arranged for use with a biasing electric field. The cell 30 includes a pair of substantially acoustically transparent cover members 32 and 34, at least one of which is optically transparent, a pair of thin-film electrodes 36 and 38 which are vacuum-deposited on the inner faces of the cover members, a thin layer of a surfactant 39, a layer of liquid crystal material 40, and a peripheral spacer 42 for sealingly encapsulating the liquid crystal material between the cover members. The electrodes 36 and 38 are connected to an external circuit 44 for controllably applying an electric field across the liquid crystal material. Only one electrode needs to be optically transparent and that is the viewer side electrode 38. The other electrode 36 is preferably reflective.

Preferably, the imaging beam 46 is incident on the cell at a small angle theta ($\theta$) (i.e., less than 10°). The cover members 32 and 34 exhibit high acoustic transmission and low angular dependence. For example, glass cover members may transmit at least 85% of incident energy at angles between ±10° of normal (i.e., perpendicular to the cell cover).

Furthermore, while this cell is shown in a diagrammatic form, it is understood that protective barrier layers can be provided to minimize potential chemical reaction between the liquid crystal material and the electrodes. Also, various types of voltage supplies, such as square wave, DC or low frequency AC, can be used.

Liquid crystal materials include elongated molecules which exhibit different dielectric properties in the parallel ($\epsilon_{\shortparallel}$) and perpendicular ($\epsilon_{\perp}$) directions. The difference ($\epsilon_{\shortparallel} - \epsilon_{\perp}$) is designated as $\Delta\epsilon$. In some nematics, such as MBBA (methoxybenzylidene-p-n'-butyl-aniline), the difference in dielectric constant is negative (i.e., $\Delta\epsilon < 0$) and, in others such as K15 (4-cyano-4'-n-pentyl biphenyl), the difference is positive (i.e., $\Delta\epsilon > 0$). In an electric field, nematic liquid crystals which are negative (i.e., $\Delta\epsilon < 0$), will align perpendicular to the field, while liquid crystal materials which are referred to as positive (i.e., $\Delta\epsilon > 0$) will align parallel to the field.

Furthermore, some nematic liquid crystals exhibit what is referred to as a two-frequency response. In such materials, the dielectric constant changes from positive to negative or vice versa with frequency. This phenomenon is useful for quickly returning a cell to its original condition or for erasing a previous image. Thus, the cell can be arranged so that in the absence of an imaging beam, the frequency of the electric field could be switched so as to erase the image.

It is also known that at the substrate/liquid crystal interface, surface forces control the alignment of the molecules adjacent the surface, which molecules in turn align neighboring molecules. However, as the liquid crystal layer is made thicker, this bulk effect is less pronounced, or in other words, the surface forces are weakened in the bulk. In addition, liquid crystal materials exhibit elasticity or elastic properties. The surface force and elastic force contribute to the magnitude of the acousto-optic threshold (T). The liquid crystal layers used herein are in the range of 5 to 200 micrometers thick, although thickness of about 500 micrometers has also been used.

In the embodiment described herein, the electric field counteracts the surface and elastic forces. In so doing low intensity acoustic fields will interact with the liquid crystal molecules causing a change in the orientation of the molecules, thus producing an image as the acousto-optic effect.

When using an electric field, it is necessary to treat and directionalize the cell surfaces which contact the liquid crystal material so as to preferentially align the molecules and to assure uniform acoustic response across the cell. It is intended that all molecules within the cell be aligned substantially parallel to each other and in a prescribed direction.

Referring now to Figs. 5a and 5b a cell whose surfaces have not been directionally surface treated is shown. In that cell the molecules form domains and within each domain the molecules are aligned. The boundaries of the domains are known as disinclinations and are clearly visible. The disinclinations are due to the abrupt change in director when one crosses from one domain to the next. It should be noted, however, that even though the directors are not aligned, the molecules in the various domains may all exhibit the same tilt angle with respect to the cell surface. (Fig. 5b).

The directionalization and surface treatment described herein will produce a substantially uniform alignment throughout a cell with all molecules substantially parallel as indicated by the bulk director. This may be referred to as a mono-domain and is shown diagrammatically in Figs. 6a and 6b. Domain boundaries do not exist in this case.

The selection of the liquid crystal material, surface treatment and use of the electric field are all interrelated as set forth hereinafter.

## II. A. Cells in Which the Liquid Crystal Is Negative (i.e., $\Delta\varepsilon < 0$)

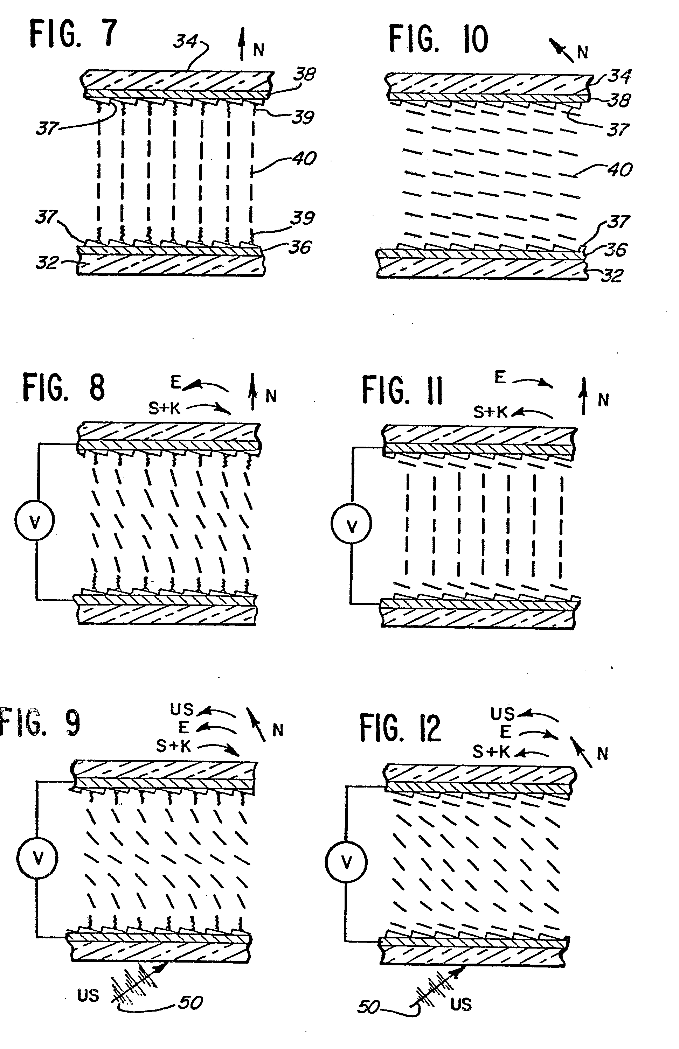

Where a nematic material having a negative difference in dielectric constant (e.g., MBBA), is to be used, it is necessary to surface treat the liquid crystal contacting surfaces of the cover members 32 and 34. The surface treatment includes first directionalizing each inner surface, for example, by rubbing it in one direction with a tissue, and/or by the deposition of silicon monoxide according to well-known vacuum deposition techniques which produce grooves or steps 37 in the surface, see Figs. 7-12. Mol. Cryst. Liq. Cryst. 1983 Vol. 94 Science Publishers Inc., Joseph A. Costellano, p. 36, et seq. The directionalizing treatment cooperates in the formation of the mono-domain alignment. After directionalization, as seen in Figure 7, a layer 39 of a surfactant, such as lecithin, is applied. Lecithin is an elongated molecule which bonds at one end to the cell surface and at the other end to an adjacent liquid crystal molecule in layer 40. This surface treatment aligns the molecules generally normal to the surface as shown at 40, Figure 7 and as indicated by the director (N↑). When the liquid crystal molecule is moved from the normal position (as by an electric field), the surface force (S) and elastic force (K) cause it to seek its original position. Surface and elastic forces are depicted as a torque or turning force in Figure 8.

When the electric field is applied, the molecules are rotated by the field (E) to a slightly skewed position relative to normal as shown in Figure 8. The magnitude of the electric field (E) is selected so as to raise cell to the threshold (T). When so rotated, the surface and elastic forces (S and K) are equal and opposite to the torque or turning force developed by the electric field (E). When the ultrasonic imaging beam 50 is applied as shown in Figure 9, it provides the additional energy needed to form the image and cause the liquid crystal molecules to rotate to positions more transverse to the beam direction, thereby forming a visually discernible image in cell. Because the field (E) counterbalances the surface and elastic forces the acousto-optic threshold has been reached and the ultrasonic imaging intensity can be at a low level. When the ultrasonic field is removed, the cell returns to the condition shown in Figure 8.

In this embodiment the ultrasonic beam is incident on the cell at angles at which the ultrasonic field cooperates with the electric field to form the image.

## EXAMPLE I

In a specific example, a cell can be prepared having two 2" x 2" x .028 inch glass cover members 32 and 34. In this example, each of the electrodes 36 and 38 are each optically transparent and are of vacuum-deposited indium/tin oxide. However, it is possible to prepare electrodes where one is transparent (e.g., indium/tin oxide) and the other opaque (e.g., aluminum).

A layer of directionalizing silicon monoxide is applied using vacuum deposition techniques to each of the electrodes. Thereafter, a lecithin coating is applied to the silicon monoxide layer. The cell is then fabricated using MBBA as the liquid crystal in a thickness of about 200 micrometers. When viewed through crossed polarizers, the structure will appear dark. At this point no voltage has been applied and no ultrasonic field has been applied.

Thereafter, two to six volts interrupted or pulsed DC is applied across the electrodes. A slight deformation of the homeotropic structure will result. When viewed between crossed polarizers, the structure will be substantially dark. This effect is seen in Figure 8.

With the voltage applied, an ultrasonic field having an intensity of about $10^{-5}$ w/cm$^2$ is applied to the cell. This further deforms the homeotropic structure in accordance with the electric field. The ultrasonic frequency is about 3.5 mHz. When viewed between crossed polarizers, the structure will appear light.

## II. B. Cells In Which The Liquid Crystal Is Positive (i.e., $\Delta\varepsilon > 0$)

Turning now to the situation where the nematic material is of the K-15 type and the dielectric constant is referred to as positive (i.e., $\Delta\varepsilon > 0$), the surface treatment is only directionalized by rubbing and/or SiO deposition. The directionalization causes the molecules throughout the cell to generally align parallel to each other and in a prescribed direction thereby forming a mono-domain. Lecithin or similar surfactants are not used in this situation.

As shown in Figure 10, the directionalization tends to cause the molecules to align at a small tilt to the surfaces of covers 32 and 34. As seen in Figure 11, when the electric field (E) is applied, the molecules will rotate and tend to align parallel to the field and are substantially normal or homeotropic. It will be noted that the electric field is competing with the surface and elastic forces. The surface and elastic forces tend to return the molecules to the original condition. When an acoustic field is applied, as seen in Figure 12, the molecules rotate to produce the desired visual image. The ultrasonic force (US) rotates the molecules transverse to the wave front to produce the image in accordance with the tendency of the surface and elastic forces.

## EXAMPLE II

As an example, a glass cell having a pair of 2" x 2" x .028 inch cover members, one transparent and one reflective electrode and a silicon monoxide (SiO) surface treatment was provided. In the initial condition the K-15 liquid crystal molecules will be in a homogenous texture. When viewed between crossed-polars, this structure can be made to transmit light. This condition is shown in Figure 10.

Thereafter, 1.5-3.0 volt interrupted or pulsed DC field was applied across the cell. This reoriented the liquid crystal molecules so that when viewed between crossed polarizers, the field will be substantially dark. The electric field will overcome the surface and elastic forces trying to align the molecules parallel to the substrate. This condition is shown in Figure 11.

Thereafter, the cell will be exposed to a 3.5 mHz ultrasonic field having an intensity of about $10^{-5}$ w/cm$^2$. When viewed between crossed polars, this structure appeared light showing the ultrasonic field distribution. See Figure 12.

III.  Magnetic Field Biasing

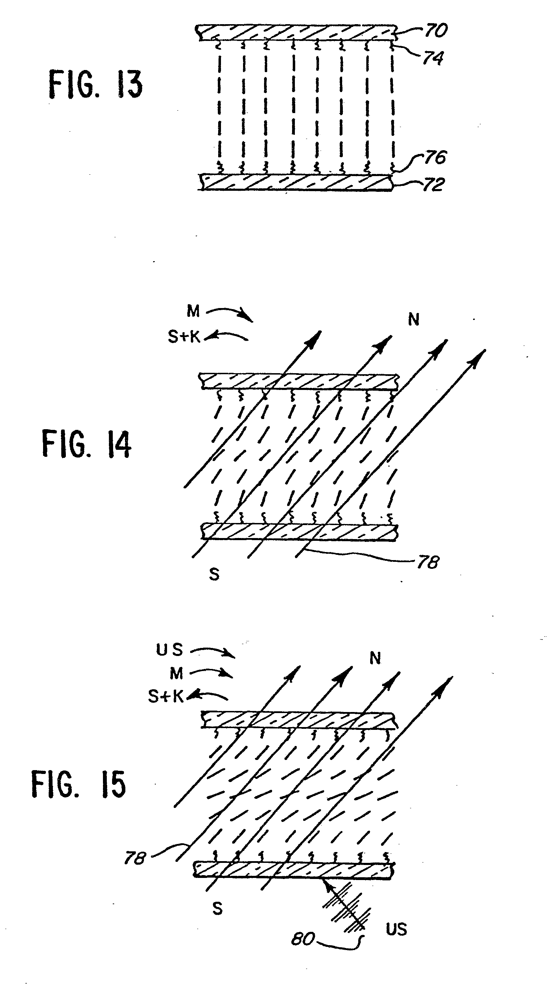

A magnetic field may also be used to establish a biasing field which can overcome the surface and elastic forces and bring the liquid crystal cell to the acousto-optic threshold.  In a magnetic field, the liquid crystal molecules tend to align themselves parallel to the magnetic field.  A construction suitable for magnetic field biasing is shown in Figure 13.  The cell is shown having a pair of cover members 70 and 72 and lecithin coatings 74 and 76.  Permanent magnets or electromagnets are provided, and their north and south poles are positioned so as to align the liquid crystal molecules parallel to the magnetic field as shown at 74 in Figure 13.

When using a biasing magnetic field, the cover surfaces are treated with lecithin or a similar surfactant 74 and 76 so as to align the molecules generally normal to the cell surfaces as previously described. When the magnetic field (M) is applied, it is selected so as to raise the cell to the threshold (T) and balance the surface and elastic forces in a manner analogous to the electric field described above.

Figure 15 shows the system of Figure 14 with the ultrasonic (US) imaging beam 80 applied thereto for producing the image.  The magnetically aligned liquid crystal molecules rotate to a position transverse to the ultrasonic beam so as to produce the image.  The torques and forces are shown again as (S), (K), (M) and (US).

EXAMPLE III

As a specific example, a cell having a pair of 2" x 2" x .028 inch thick cover plates was treated with lecithin and a liquid crystal material such as K-15 was encapsulated therebetween. This produced a homeotropic alignment as shown in Figure 13, and when viewed between crossed-polars, the structure appeared dark.

Thereafter, an 800 gauss magnetic field was applied to the cell by placing 800 gauss magnets a few centimeters away from the outer surfaces of the cell substrates and at an angle of about 45 degrees. The distance between the magnet and the substrate was varied until a slight birefringence effect was detected. When this cell is viewed between crossed polarizers, the cell appears substantially dark. This condition is seen in Figure 14.

Thereafter an acoustic beam having a 3.5 mHz frequency and intensity of between about 1 and $20 \times 10^{-5}$ $w/cm^2$ (as determined from the transducer rating provided by the manufacturer) was directed at the cell. The cell appeared light and is diagrammatically shown in Figure 15.

## IV. Acoustic Biasing

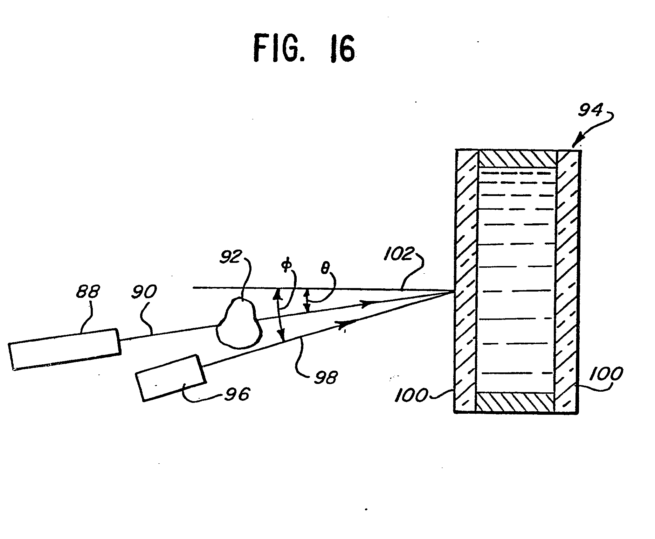

Referring now to Figure 16, an acoustic biasing system is shown diagrammatically. In that system the insonifying or imaging transducer 88 directs the insonifying beam 90 to the object 92 and in the transmission mode the imaging beam exits the object 92 and is incident on a detector cell shown generally as 94. A second ultrasonic transducer 96 provides the biasing acoustic field 98.

The imaging beam 90 and biasing beam 98 contact cell 94 as shown. The imaging beam 90 is preferably at an angle theta ($\theta$) to the normal and the biasing beam 98 is at an angle phi ($\phi$) to the normal. The angles of the imaging and biasing beam are selected so as to maximize transmission and minimize the internal reflection.

Transmission through liquid crystal cell cover 100 is dependent in part on the angle of incidence of the beam to each cell cover 100. For example, in glass, it is known that small angular variations of ±10° from normal do not have an appreciable adverse effect on transmission if the substrate thickness is approximately $\lambda/2$. Other materials may have different thickness.

It is also to be noted that the biasing beam is positioned on the same side of the normal 102 as is the imaging beam 90 so that both beams operate to rotate the liquid crystal molecules in the same direction. The biasing beam 98 raises the cell to the threshold and the imaging beam 90 raises the cell into the image forming region.

Furthermore, it is desirable that the imaging beam and biasing beam not be coherent. This minimizes potential interference between the imaging beam and the biasing beam. This lack of coherency can be produced by techniques such as frequency sweeping.

In the acoustic biasing system it is desirable that the nematic material be homeotropically aligned, and if necessary, lecithin or another surfactant may be used.

In the acoustic system the biasing field beam can have an intensity of between $1\text{-}10 \times 10^{-3}$ w/cm$^2$ and the imaging beam may have an intensity of about $10^{-5}$ w/cm$^2$.

## V. Effect of the Nematic/Isotropic Temperature

In the previous examples I through III and descriptions, the cells were operated at room temperature, about 18 degrees C. The nematic/isotropic (N/I) temperature for K-15 is about 35 degrees C. When the operating temperature is raised to just below N/I, for example to 33°C, then the sensitivity is raised to

about $10^{-7}$ w/cm$^2$.

It will be appreciated that numerous changes and modifications can be made to the device disclosed herein without departing from the spirit and scope of this invention.

CLAIMS

1. A liquid crystal cell for use in an orthoscopic ultrasonic imaging system for detecting acoustic imaging beams and for displaying an image, said cell of the type characterized by a pair of cover members, each of which is substantially acoustically transparent; and at least one of which is optically transparent; each said cover members having an inner surface; a layer of liquid crystal material disposed between said inner surfaces of said covers; peripheral spacer means disposed between said cover member, sealingly engaging said cover member and encapsulating said liquid crystal material; said cell being further characterized by an acousto-optic threshold;

wherein the improvement comprises there being further provided:

biasing field means for raising said cell to said threshold,

means for directionally aligning said liquid crystal material relative to said inner surfaces of said cover members,

so that said cell will display an image when excited by a low intensity imaging beam.

2. A cell as in Claim 1, wherein said cell is characterized by detecting and displaying imaging beams incident thereon having an intensity less than $10^{-3}$ w/cm$^2$ and preferably about $10^{-7}$ w/cm$^2$.

3. A cell as in Claim 1 or 2, wherein the nematic/isotropic transformation temperature of the liquid crystal material is near but below the operating temperature of the cell.

4. A cell as in any preceding claim, wherein said biasing field means is an electric field, the biasing means includes electrode means applied to each of said cell cover members, said liquid crystal material disposed between said electrodes, and means for controllably applying a voltage to said electrodes to raise said cell to said image forming threshold.

5. A cell as in Claim 4, wherein said liquid crystal material is of the nematic type in which the difference in dielectric constants is either positive or negative, $\Delta \varepsilon < 0$, and wherein said inner surfaces have been directionalized, for example by each of said inner surfaces having been rubbed in order to directionalize said surfaces, or by a silicon monoxide layer deposited on said inner surfaces.

6. A cell as in Claim 5, wherein said surfaces have been treated with a surfactant such as lecithin.

7. A cell as in any one of Claims 1 to 3, wherein said biasing force means comprises a magnetic field, magnet means are positioned on opposite sides of said cell for aligning said liquid crystal molecules parallel to the magnetic field, and said inner surfaces have a surfactant, such as lecithin, applied thereto and counterbalance the surface and elastic forces.

8. A liquid crystal cell for use in an orthoscopic ultrasonic imaging system for detecting acoustic imaging beams and for displaying an image, said cell including a pair of cover members, each of which is substantially acoustically transparent and at least one of which is optically transparent; a layer of liquid crystal material disposed between said cover members; peripheral spacer means disposed between said cover members for sealingly engaging said cover members and encapsulating said liquid crystal material therebetween; said cell having an imaging beam receiving side, and said cell being characterized by an acousto-optic threshold,

wherein the improvement comprises there being further provided:

acoustic biasing means for applying an acoustic field, which is not coherent with the imaging field, to said imaging-beam receiving side of said cell to raise said cell to said threshold so that said cell will display an image when excited by a low intensity imaging beam.

9. A cell as in Claim 8, wherein said cell is substantially acoustically transparent in an angular range about a line normal to the surface of said cover members and wherein said imaging beam is incident on said cell at a first angle within said range and said biasing field is incident on said cell at a second angle within said range.

10. In an ultrasonic imaging system for non-destructively and non-invasively inspecting an object and displaying an image thereof, said system including ultrasonic source means for insonifying said object with acoustic energy;

liquid crystal cell display means for detecting imaging acoustic signals exiting from said insonified object and for displaying an orthoscopic image thereof; said cell including a pair of substantially acoustically transparent cover members, a layer of liquid crystal material disposed therebetween, each said cover members having an inner surface, and peripheral spacer means disposed between said covers, sealingly engaging said covers and encapsulating said liquid crystal material therebetween; said cell being characterized by an image-forming energy threshold;

optical means for illuminating said cell and for viewing images displayed thereon; and

means for acoustically coupling said ultrasonic source, said object and said cell means;

wherein the improvement comprises there being further provided:

biasing means for raising the said cell to said image-forming threshold; and

means for selectively aligning the liquid crystal molecules relative to said inner surfaces of said cover members.

11. An ultrasonic imaging system for non-destructively and non-invasively inspecting an object and displaying an image thereof, said system including:

an ultrasonic source for insonifying said object with acoustic energy; liquid crystal cell display means for detecting the imaging acoustic field exiting from said insonified object and for displaying an orthoscopic image of said signals; said cell including a pair of substantially acoustically transparent cover members, a layer of liquid crystal material disposed therebetween, and peripheral spacer means disposed between said cover members, sealingly engaging said cover members and encapsulating said liquid crystal material therebetween, said cell being characterized by an image-forming threshold; and said cell having an imaging beam receiving side and a viewing side;

optical means for illuminating said cell and for viewing images displayed thereon; and means for acoustically coupling said ultrasonic source, object and cell means;

wherein the improvement comprises there being further provided:

acoustic biasing means for applying an acoustic field, which is not coherent with the imaging field, to the imaging beam receiving side of said cell so as to raise said cell to said image-producing threshold so that a low intensity imaging beam incident on said cell will raise said cell above said threshold and form an image.

# FIG. 1

# FIG. 2

# FIG. 3

ACOUSTO-OPTIC EFFECT

$\Delta$ AOE

R
G
B
V

T

$\Delta$I

IMAGING INTENSITY

FIG. 4

FIG. 5a

FIG. 6a

FIG. 5b

FIG. 6b

FIG. 7

FIG. 10

FIG. 8

FIG. 11

FIG. 9

FIG. 12

FIG. 13

FIG. 14

FIG. 15

# FIG. 16